(19) Europäisches Patentamt
European Patent Office
Office européen des brevets

(11) **EP 2 231 452 B1**

(12) **EUROPÄISCHE PATENTSCHRIFT**

(45) Veröffentlichungstag und Bekanntmachung des Hinweises auf die Patenterteilung:
**07.05.2014 Patentblatt 2014/19**

(21) Anmeldenummer: **08870502.5**

(22) Anmeldetag: **14.11.2008**

(51) Int Cl.:
**B60T 8/36** *(2006.01)*   **B60T 8/172** *(2006.01)*

(86) Internationale Anmeldenummer:
**PCT/EP2008/065513**

(87) Internationale Veröffentlichungsnummer:
**WO 2009/086975 (16.07.2009 Gazette 2009/29)**

(54) **VERFAHREN FÜR DIE STEUERUNG EINES MAGNETVENTILS**

METHOD FOR CONTROLLING A SOLENOID VALVE

PROCÉDÉ DE COMMANDE D'UNE ÉLECTROVANNE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **10.01.2008 DE 102008003798**

(43) Veröffentlichungstag der Anmeldung:
**29.09.2010 Patentblatt 2010/39**

(73) Patentinhaber: **Robert Bosch GmbH**
**70442 Stuttgart (DE)**

(72) Erfinder:
• **RUBENBAUER, Michael**
**97078 Wuerzburg (DE)**
• **LOLENKO, Kostyantyn**
**70435 Stuttgart (DE)**

(56) Entgegenhaltungen:
| | |
|---|---|
| EP-A- 0 779 631 | WO-A-00/55021 |
| DE-A1- 3 731 076 | DE-A1- 19 961 293 |
| DE-A1-102006 022 806 | US-A- 5 636 910 |

## Beschreibung

Stand der Technik

Die Erfindung betrifft ein Verfahren für die Steuerung eines Magnetventils und eine Vorrichtung mit Mitteln, worin das Verfahren durchgeführt wird. Bei dem Magnetventil handelt es sich um ein Proportionalmagnetventil, das für die Steuerung des Drucks in einem hydraulischen System eingesetzt wird. Insbesondere handelt es sich um ein in einem Kraftfahrzeug eingesetztes hydraulisches System, wie ABS und/oder ESP.

Bei dem Verfahren wird die Spulenspannung des Magnetventils bestimmt und der Istwert des Drucks in dem hydraulischen System geschätzt.

Bekannte Verfahren der gattungsgemäßen Art werden für die Realisierung fahrdynamischer Regelsysteme wie ABS, ESP, ASR und dergleichen, benötigt. Ein Proportionalmagnetventil wird dabei für den gezielten Druckaufbau bzw. -abbau in dem hydraulischen System genutzt. Das hydraulische System kann beispielsweise einen hydraulischen Bremskreis, eine hydraulisch betätigbare Kupplung in einem automatisierten Schaltgetriebe, hydraulische Aktoren zur Beeinflussung der Fahrdynamik, oder dergleichen mehr umfassen. Bekannte Steuerungen eines Proportionalmagnetventils für ABS/ESP-Systeme gehen entweder von einem rein stationären Verhalten des Proportionalmagnetventils (dp-Methode), einem reinen Schaltverhalten (Quasischalt-Methode) oder einem linearen Ventilverhalten (LMV-Methode) aus. Die Auswahl der zu verwendenden Methode hängt von dem geforderten Druckgradienten ab. Bei der Druckschätzung in dem Bremszylinder geht man bei den bekannten Lösungen in der Regel immer davon aus, dass der Solldruck am Ende der Betätigung des Proportionalmagnetventils genau erreicht wird, soweit dieser im Rahmen physikalischer Grenzen realisierbar ist.

Die Vielfalt der verschiedenen Methoden führt dazu, dass man eindeutige Umschaltbedingungen zwischen den verschiedenen Methoden definieren muss. Dadurch sind die Ventilansteuerung, die Druckschätzung und der Applikationsprozess sehr kompliziert. Wichtige Einflussgrößen, wie die Induktivität der Spule des Proportionalmagnetventils, die nichtlineare Abhängigkeit des Ventildurchflusses von dem Spulenstrom und der Druckdifferenz sind in keiner der obengenannten bekannten Ansteuermethoden berücksichtigt. Bei der Druckschätzung werden ebenso das dynamische Verhalten und die Nichtlinearität des Proportionalmagnetventils vernachlässigt, was zu Fehlern bei der Schätzung des Bremsdrucks führt bzw. durch die Einführung von zusätzlichen Termen heuristisch berücksichtigt werden muss.

Offenbarung der Erfindung

Technische Aufgabe

Der Erfindung liegt die Aufgabe zugrunde, ein verbessertes Verfahren für die Steuerung eines Proportionalmagnetventils, zu schaffen, das die genannten Nachteile der bekannten Verfahren nicht mehr aufweist.

Technische Lösung

Ausgehend von einem Verfahren für die Steuerung eines Proportionalmagnetventils, in einem hydraulischen System, nach dem Stand der Technik, z.B. WO 00/55021 A1, wird diese Aufgabe erfindungsgemäß durch die Merkmale des Anspruchs 1 gelöst, wonach ein Modell des hydraulischen Systems gebildet wird, dass Steuerzyklen vorgegeben werden, und dass eine Schätzung des am Ende des Steuerzyklus vorliegenden Drucks in dem hydraulischen System und der an der Spule des Magnetventils anliegenden Spulenspannung auf Basis der zu Beginn des Steuerzyklus vorliegenden Größen, der physikalischen Parameter von Komponenten des hydraulischen Systems und der Temperatur des Hydraulikfluids erfolgt.

Vorteilhafte Wirkungen

Das erfindungsgemäß vorgeschlagene Verfahren für die Steuerung eines Proportionalmagnetventils ermöglicht eine Verbesserung der Genauigkeit bei der Druckschätzung und Druckstellung und somit eine Steigerung der Robustheit des hydraulischen Systems. Das erfindungsgemäß vorgeschlagene modellbasierte Verfahren erlaubt eine Parametrierung der Steuerung und der Druckschätzung aus den physikalischen Parametern der Komponenten des Hydrauliksystems, wie insbesondere des Proportionalmagnetventils und der Bremszange eines ABS/ESP-Systems für Kraftfahrzeuge. Dadurch kann das Verfahren der Druckschätzung und Steuerung vergleichsweise schnell und kostengünstig an unterschiedliche Ventile und hydraulische Systeme angepasst werden, was eine deutliche Verringerung des Applikationsaufwands zur Folge hat. Weiterhin ist das vorgeschlagene Steuerverfahren einfacher als bekannte Lösungen, was unter anderem die Wartung des Systems vereinfacht. Die in dem Verfahren vorgesehenen Tuning-Parameter erlauben vorteilhaft die Beeinflussung der Dynamik der Steuerung des Bremsdrucks und/oder der mit der Steuerung des Ventils verbundenen Geräuschentwicklung.

Die Spulenspannung wird aus dem Solldruck und dem aktuellen Bremsdruck, dem Druck in dem Hauptbremszylinder, der Temperatur der Bremsflüssigkeit und den physikalischen Ventil- und Bremszangenparametern bestimmt Der Wert des Drucks in dem Bremszylinder am Ende jeder Ansteuerzykluszeit wird genau geschätzt. Die Grundlage der Ansteuerung und der Druckschätzung bildet ein dynamisches Streckenmodell, das das dynamische und nichtlineare Verhalten des Ventils abbildet. Bei der Bestimmung der Steuerspannung und auch der Druckschätzung werden die physikalischen Streckenparameter sowie die Umgebungsbedingungen, die Temperatur des Hydraulikfluids und die Drücke in der Bremszange und dem Hauptbremszylinder berücksichtigt. Die Steuerung und Druckschätzung ist modular aufgebaut. Dadurch ist eine einfache Anpassung des Verfahrens an unterschiedliche Ventiltypen und Bremssysteme möglich.

Die entworfene Ventilansteuerung kann auch bei einer Druckregelung in Form einer Vorsteuerung eingesetzt werden.

Die Druckstell- und Druckschätzgenauigkeit wird durch das erfindungsgemäße Verfahren erhöht. Zudem wird eine Verbesserung des Robustheitsverhaltens (Berücksichtigung der Umgebungsbedingungen) erzielt. Des Weiteren wird wegen der Berücksichtigung der physikalischen Streckenparameter in der Ansteuerung und der Bremsdruckschätzung eine Reduktion ihrer Komplexität und somit eine Vereinfachung der Applikation erreicht. Das Verfahren eignet sich für eine Vielzahl hydraulischer Systeme, zur Realisierung des Fahrerwunsches z.B. auch für hydraulische X-by-wire Aktoren im Bereich von Lenkung und Bremsen eines Kraftfahrzeugs.

Die Parameter und Kennfelder des der Steuerung und der Druckschätzung zu Grunde liegenden Modells können durch die Komponentenmessung identifiziert und bei der Steuerung und der Druckstellung eingesetzt werden. Für die Lösung des eingangs genannten Problems wird ein Steuergerät für ein hydraulisches System benötigt, das das vorgeschlagene Verfahren ausführen kann. Das Verfahren kann z. B. als Programm einer speicherprogrammierbaren ABS/ESP Steuerung abgelegt oder in Hardware realisiert sein.

Weitere Vorteile ergeben sich aus der Beschreibung, den Unteransprüchen und der Zeichnung.

Kurze Beschreibung der Zeichnungen

Ausführungsformen der Erfindung werden nachfolgend unter Bezug auf die Zeichnung näher erläutert. Dabei zeigt:

Figur 1 die Komponenten der betrachteten Steuerstrecke für den Druckaufbau;

Figur 2 in einem Diagramm den Soll-, Ist- und Schätzdruck bei einer Ventilbetätigung als Funktion der Zeit;

Figur 3 ein Ablaufdiagramm für die Erläuterung der Auswahl zwischen der Druckaufbauphase und der Druckhaltephase;

Figur 4 ein Ablaufdiagramm für die Berechnung der Spulenspannung des Proportionalmagnetventils;

Figur 5 ein Ablaufdiagramm für die Berechnung des geschätzten Bremszangendrucks am Ende des Steuerzyklus;

Figur 6 ein Blockdiagramm zur Erläuterung der Schnittstellen.

Ausführungsformen der Erfindung

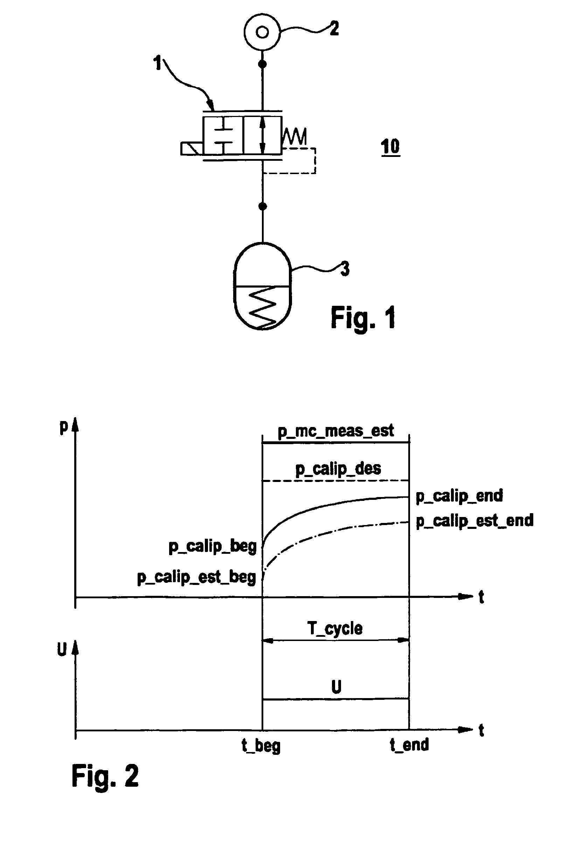

Die Erfindung wird im Folgenden exemplarisch am Beispiel eines ABS/ESP-Systems eines Kraftfahrzeugs erläutert. Dabei wird von einer digitalen Realisierung mit einer festen Abtastzeit (Zykluszeit) ausgegangen. Figur 1 zeigt dazu, in einer schematischen und vereinfachten Darstellung, die wesentlichen Komponenten der betrachteten Steuerstrecke für den Druckaufbau, umfassend ein Proportionalmagnetventil 1 als Steuerglied, einen Hauptbremszylinder 2 als Druckquelle und eine Bremszange 3 als Speicher. Für die Berechnung der Spulenspannung an dem Proportionalmagnetventil 1 wird jeweils ein dynamisches Modell herangezogen.

Modell der Strecke

Im Folgenden wird zuerst das Steuerungs- und Schätzproblem formuliert und dann wird der Berechnungsweg für die Spulenspannung und den Bremsdruck mit Hilfe des Modells dargestellt, das dem erfindungsgemäßen Verfahren zugrunde liegt.

Das Gleichungssystem des Modells für das Proportionalmagnetventil 1 besteht aus einer Differentialgleichung für die Spule mit einer Induktivität L und einem ohmschen Widerstand R:

$$(1) \qquad \frac{dI}{dt} = \frac{1}{L}(U - R \cdot I),$$

mit

L       = Induktivität der Spule
R       = ohmscher Widerstand der Spule
I       = Spulenstrom
dI/dt   = zeitliche Änderung des Spulenstroms.

Weiterhin umfasst das Gleichungssystem eine Gleichung für die Abhängigkeit des Durchflusses des Hydraulikfluids von der Druckdifferenz an dem Proportionalmagnetventil 1, dem Spulenstrom und der Temperatur des Hydraulikfluids für die Hydromechanik des Proportionalmagnetventils 1:

$$(2) \qquad Q = f_1(I, p\_mc - p\_calip, T\_Fluid),$$

mit:
Q = Durchfluss
P_mc - p_calip = Druckdifferenz an dem Proportionalmagnetventil
I = Spulenstrom
T_Fluid = Temperatur des Hydraulikfluids
Schließlich umfasst das Gleichungssystem eine Differentialgleichung für den Bremszangendruck, die von einer hydraulischen Elastizität der Bremszange 3 abhängt:

$$(3) \qquad \frac{dp\_calip}{dt} = E(p\_calip, T\_Fluid) \cdot Q,$$

mit:

p_calip     = Bremszangendruck
E           = hydraulische Elastizität der Bremszange
Q           = Durchfluss
T_Fluid     = Temperatur des Hydraulikfluids.

Das Steuerungsproblem

Figur 2 zeigt, in einem Diagramm, die Spannung U an dem Proportionalmagnetventil 1 und den Druck p in dem Hydrauliksystem als Funktion der Zeit t, wobei in dem Diagramm der Soll-, Ist- und Schätzdruck bei einer Ventilbetätigung dargestellt sind.
Ein Steuerzyklus ist mit T_cycle bezeichnet, der bei t_beg beginnt und bei t_end endet. Die Spannung U, die während eines Steuerzyklus T_cycle an der Spule des Proportionalmagnetventils 1 anzulegen ist (Fig. 2), wird aus dem Sollbremsdruck p_calip_des, dem geschätzten Druck zu Beginn des Steuerzyklus p_calip_est_beg, dem gemessenen oder geschätzten Druck des Hauptbremszylinders p_mc_meas_est, der geschätzten Temperatur des Hydraulikfluids T_Fluid_est und den Streckenparametern des dem Verfahren zugrunde liegenden Modells nach der folgenden Beziehung berechnet:

(4)

$$U = f_1\left( p\_calip\_des, p\_calip\_est\_beg, p\_mc\_meas\_est, T\_Fluid\_est, parameters \right)$$

mit

| | |
|---|---|
| U | = Spannung an dem Proportionalmagnetventil |
| P_calip_des | = Sollbremsdruck |
| P_calip_est_beg | = geschätzter Druck in dem Bremszylinder zu Beginn des Steuerzyklus |
| P_mc_meas_est | = gemessener bzw. geschätzter Druck des Hauptbremszylinders |
| T_Fluid_est | = geschätzte Temperatur des Hydraulikfluids |
| parameters | = Streckenparameter. |

Der geschätzte Bremsdruck an dem Ende des Steuerzyklus T_cycle muss aus der Spulenspannung, dem geschätzten Druck am Anfang des Steuerzyklus, dem gemessenen oder geschätzten Druck des Hauptbremszylinders, der geschätzten Temperatur des Hydraulikfluids und den Streckenparametern nach der folgenden Beziehung berechnet werden:

(5) $$p\_calip\_est\_end = f_2\left( U, p\_mc\_meas\_est, p\_calip\_est\_beg, T\_Fluid\_est, parameters \right)$$

mit:

| | |
|---|---|
| P_calip_est_end | = geschätzter Bremsdruck am Ende des Steuerzyklus, |
| T_cycle | = Steuerzyklus, |
| U | = Spulenspannung, |
| p_calip_est_beg | = geschätzter Druck am Anfang des Steuerzyklus, |
| p_mc_meas_est | = Druck an dem Hauptbremszylinder, |
| T_Fluid_est | = geschätzte Temperatur des Hydraulikfluids, |
| parameters | = Streckenparameter. |

Ermittlung der Steuerspannung

In jedem Steuerzyklus T_cycle wird, mit Hilfe der nachfolgend genannten Bedingungen, bewertet, ob es zweckmäßig ist, den Bremsdruck zu halten (Druckhaltephase)

(6)     (p_calip_des - p_calip_est) < Δp_min

oder aufzubauen (Druckaufbauphase)

(7)     (p_calip_des - p_calip_est) >= Δp_min.

In dem Steuerverfahren ist darüber hinaus weiter vorgesehen, die minimale Schwelle U_min und die maximale Schwelle U_max der Spulenspannung U vorzugeben. Wenn die in der Druckaufbauphase berechnete Spannung U_incr größer als U_max wird, findet ein Wechsel in die Druckhaltephase statt. Wenn die in der Druckaufbauphase berechnete Spannung U_incr kleiner ist als die minimale Spannung U_min, wird der minimale Wert U_min als Spulenspannung gewählt.

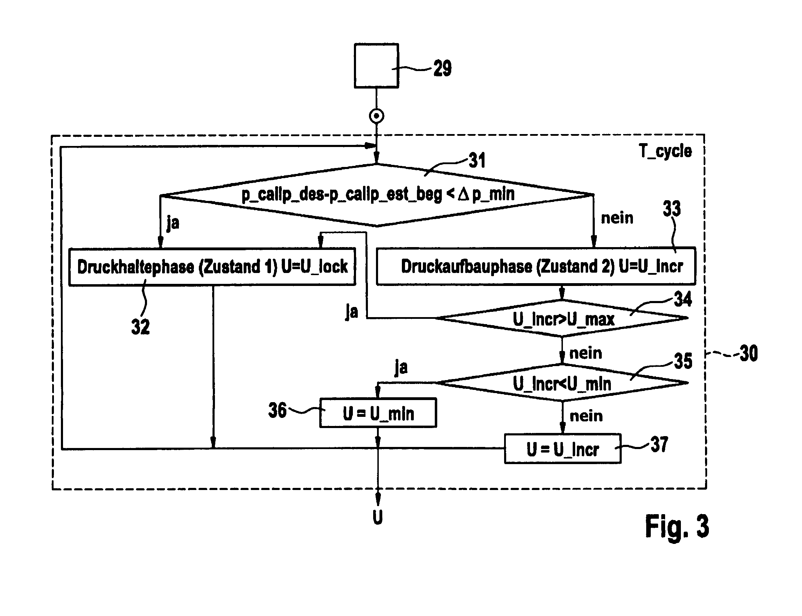

Durch die Wahl der minimalen Druckstufe Δp_min, der minimalen Spannung U_min und der maximalen Spannungsschwelle U_max werden die Dynamik, das Geräusch und die Robustheit der Steuerung des Proportionalmagnetventils 1 beeinflusst. Die Berechnung der Steuerspannung wird im Folgenden unter Bezug auf das in Figur 3 dargestellte Ablaufdiagramm noch eingehender erläutert. Der Schritt 29 aktiviert ein Funktionsmodul 30, in dem die nachfolgend beschriebenen Schritte durchgeführt werden. In dem Schritt 31 wird geprüft, ob die Druckdifferenz (p_calip_des-p_calip_est) größer/gleich oder kleiner als der Druckwert der minimalen Druckstufe $\Delta$p_min ist. Sofern die genannte Druckdifferenz kleiner als der Druckwert der minimalen Druckstufe ist, wird zu dem Schritt 32 übergegangen, in dem eine Spulenspannung U mit dem Wert U_lock für die Steuerung des Proportionalmagnetventils 1 bereitgestellt wird. Auf diese Weise wird die Druckhaltephase eingeleitet. Falls alternativ die genannte Druckdifferenz größer ist als der Druckwert der minimalen Druckstufe, wird zu dem Schritt 33 übergegangen, in dem zwecks Aufbaus eines höheren Drucks (Druckaufbauphase) die Spulenspannung auf den Wert U_incr angehoben wird. In Schritt 34 wird geprüft, ob die Spannung U_incr größer ist als ein maximaler Schwellwert U_max. Wenn dies der Fall ist, wird zu dem Schritt 32 verzweigt und die Druckhaltephase eingeleitet. Wenn dies nicht der Fall ist, wird zu dem Schritt 35 verzweigt In dem Schritt 35 wird geprüft, ob die Spannung U_incr kleiner als die minimale Schwelle U_min ist oder nicht. Wenn die Spannung kleiner als die minimale Schwelle U_min ist, wird zu dem Schritt 36 verzweigt und die Spulenspannung auf den Wert U= U_min gesetzt bevor die Druckhaltephase eingeleitet wird. Ergibt die Prüfung in dem Schritt 35, dass die Spannung U_incr größer ist als die minimale Schwelle U_min, dann wird im Schritt 37 der Spannungswert U_incr für die Steuerung des Proportionalmagnetventils 1 und die Einleitung der Druckhaltephase übernommen. In der Druckhaltephase wird somit eine Spulenspannung U_lock angelegt, die ein sicheres Schließen des Proportionalmagnetventils 1 und dadurch das Halten des Drucks in der Bremszange 3 ermöglicht. Die Spannung wird aus dem geschätzten Spulenwiderstand R_est, einer Druckdifferenz (p_mc_meas_est-p_calip_est_beg) zwischen dem geschätzten oder gemessenen Druck im Hauptbremszylinder und dem geschätzten Anfangsbremsdruck bestimmt. Die zusätzliche Druckdifferenz $\Delta$p_sicher garantiert ein sicheres Druckhalten bei evtl. auftretenden Änderungen der Fahrerbetätigung, und/oder Mess- bzw. Schätzfehlern des Bremsdrucks während eines Steuerzyklus. Um auch bei auftretenden Ventiltoleranzen das Ventil sicher zu schließen kann z.B. bei der Berechnung von U_lock ein "worst case"-Ventilkennfeld $f_{wcase}^{-1}(.....)$ eingesetzt werden, das das Verhalten eines Grenzventils abbildet.

Der Spulenstrom wird durch die Inversion der Gleichung (2) nach der Druckdifferenz (p_mc_meas est - p_calip_est_beg) für Q = 0 berechnet. Zusätzlich ist noch eine Begrenzung des Stroms auf den Wert I_max vorgegeben, um gegebenenfalls eine thermische Überlastung des Ventils verhindern zu können:

$$(8) \quad I\_lock = \min\left[ f_{wcase}^{-1}\left( p\_mc\_meas\_est - p\_calip\_est\_beg + \Delta p\_sicher, Q = 0, T\_Fluid \right), I\_max \right]$$

Mit

I_lock = Haltestrom  
P_mc_meas_est = gemessener oder geschätzter Druck in dem Hauptbremszylinder  
P_calip_est_beg = geschätzter Druck in der Bremszange zu Beginn des Steuerzyklus  
$\Delta$p_sicher = zusätzliche Druckdifferenz zur Sicherung des geschlossenen Zustands des Ventils bei der Druckhaltephase  
Q=0 = kein Durchfluss  
T_Fluid = Temperatur des Hydraulikfluids.

Die anstehende Spulenspannung wird aus dem mit GI 8 berechneten Haltestrom I_lock und dem geschätzten Spulenwiderstand R_est wie folgt berechnet:

$$(9) \quad U\_lock = \left( R\_est + \Delta R \right) \cdot I\_lock .$$

Mit dem Parameter $\Delta$R wird in (9) der maximale Fehler berücksichtigt, welcher bei der Unterschätzung des Widerstands R entstehen kann. Damit wird sichergestellt, dass der Spulenstrom mindestens den Wert I_lock hat.

Die Funktion $f_{wcase}^{-1}(.....)$ kann als eine 2D-Tabelle, bzw. bei der Vernachlässigung der Abhängigkeit von der Temperatur des Hydraulikfluids T_Fluid, als eine 1D-Tabelle in einem Steuergerät abgelegt werden. Alternativ könnte das Kennfeld mit einer analytischen Funktion geeignet angenähert werden, so dass der Speicherbedarf und evtl. auch der Berechnungsaufwand reduziert werden können.

Die Druckaufbauphase

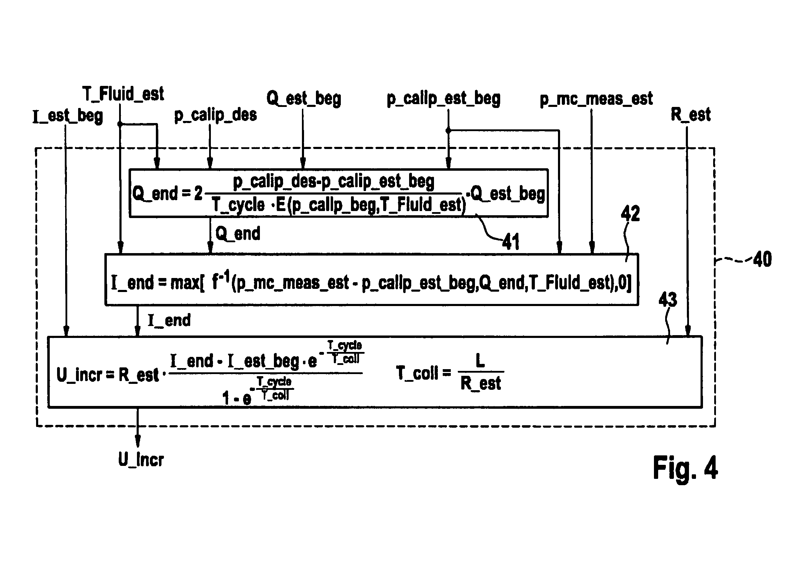

Im Folgenden wird, auch unter Bezug auf das in Figur 4 dargestellte Ablaufdiagramm, die Druckaufbauphase weiter beschrieben. In dem Funktionsmodul 40 finden die nachfolgend beschriebenen Abläufe statt. Durch die algebraische Inversion des Gleichungssystems mit den Gleichungen (1), (2), (3) wird die notwendige Spulenspannung U_incr aus der Sollvorgabe für den Bremsdruck p_calip_des, den geschätzten Anfangsdruck p_calip_est_beg in dem Bremszylinder, dem geschätzten oder gemessenen Druck in dem Hauptbremszylinder p_mc_meas_est, dem geschätzten Spulenwiderstand R_est, der geschätzten Temperatur des Hydraulikfluids T_Fluid und den Streckenparametern bestimmt.

In einem ersten Schritt berechnet man durch Integration der Modellgleichung (1), unter der Annahme eines linearen Durchflussverlaufs, den Durchfluss Q gemäß der folgenden Beziehung:

$$(10) \qquad Q = Q\_est\_beg + \frac{Q\_end - Q\_est\_beg}{T\_cycle} t$$

Und während des Steuerzyklus T_cycle den notwendigen Durchfluss Q_end (Schritt 41 in Figur 4) an dem Ende der Steuerzykluszeit T_cycle, um den Sollbremsdruck p_calip_des zu erreichen:

$$(11) \qquad Q\_end = 2 \frac{p\_calip\_des - p\_calip\_est\_beg}{T\_cycle \cdot E\left(p\_calip\_est\_beg, T\_Fluid\_est\right)} - Q\_est\_beg$$

Anschließend wird durch die Inversion der Gleichung (2) der Spulenstrom an dem Ende des Steuerzyklus berechnet und auf den Wert Null begrenzt (Schritt 42 in Figur 4):

$$(12)$$
$$I\_end$$
$$= \max\left[ f^{-1}\left(p\_mc\_meas\_est - p\_calip\_est\_beg, Q\_end, T\_Fluid\_est\right), Q = 0\right]$$

Schließlich wird aus der Lösung der Differentialgleichung (3) die Spannung U_incr berechnet, die während des Steuerzyklus anzulegen ist (Schritt 43 in Figur 4):

$$(13) \qquad U\_incr = R\_est \frac{I\_end - I\_est\_beg \cdot e^{-\frac{T\_cycle}{T\_coil}}}{1 - e^{-\frac{T\_cycle}{T\_coil}}}.$$

Die Spulenzeitkonstante T_coil wird aus der Induktivität L und dem geschätzten Widerstand R_est der Spule des Proportionalmagnetventils 1 nach der folgenden Beziehung berechnet:

$$(14) \qquad T\_coil = \frac{L}{R\_est}.$$

Im Fall eines Proportionalmagnetventils mit einem Stromregler wird anstelle der Spulenspannung ein Stromsollwert vorgegeben. Diesen bildet man aus dem Haltestrom I_lock und dem Endstrom I_end während der Druckaufbauphase.

Als Vereinfachung kann die Abhängigkeit f⁻¹(...) mit Hilfe einer analytischen Funktion angenähert werden. Alternativ kann sie auch als Kennfeld in einer Speichereinrichtung gespeichert und weiterverwendet werden. Die elektrische Spulenzeitkonstante T_coil aus (12) kann darüber hinaus als konstanter Parameter angenähert werden. Die exponentielle Abhängigkeit $e^{-\frac{T\_cycle}{T\_coil}}$

in (13) kann entweder linear angenähert oder, unter der Annahme einer konstanten Spulenzeitkonstante T_coil, als ein konstanter Parameter betrachtet werden.

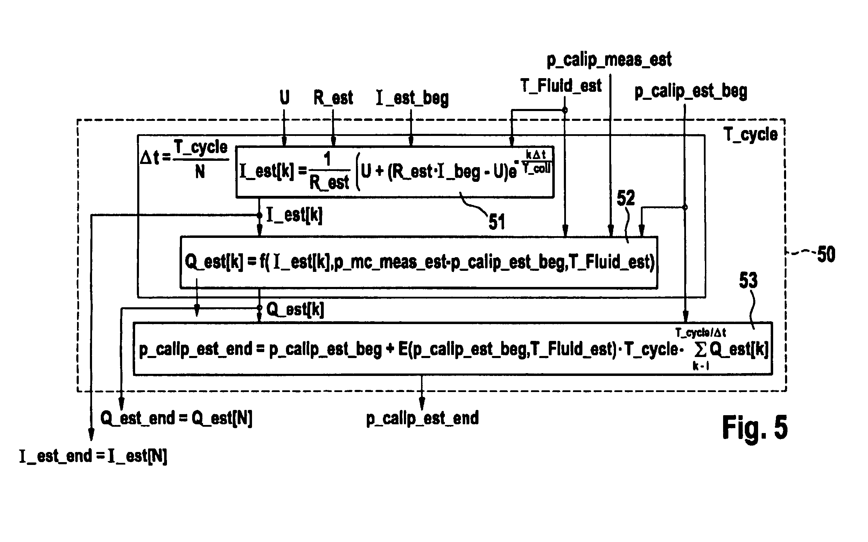

Im Folgenden wird, unter Bezug auf das in Figur 5 dargestellte Ablaufdiagramm, beschrieben, wie der Druck in der Bremszange 3 ermittelt wird. Die nachfolgend beschriebenen Abläufe finden in dem Funktionsmodul 50 statt Der geschätzte Bremszangendruck p_calip_est_end am Ende eines Steuerzyklus T_cycle wird aus der Spulenspannung U, dem geschätzten Druck am Anfang des Steuerzyklus p_calip_est_beg, dem gemessenen oder dem geschätzten Druck des Hauptbremszylinders p_mc_meas_est, der geschätzten Temperatur des Hydraulikfluids T_Fluid_est und den Streckenparametern berechnet.

Um eine genauere Bewertung der Strom-, und Durchflussschätzung und somit auch eine genauere Druckschätzung zu erreichen, wird der Steuerzyklus T_cycle in N Abschnitte der Dauer Δt eingeteilt. Für jeden Abschnitt wird der Strom nach der folgenden Beziehung berechnet (Schritt 51 in Figur 5):

$$(15) \quad I\_est[k] = \frac{1}{R\_est}\left(U + (R\_est \cdot I\_beg - U)e^{-\frac{k\Delta t}{T\_coil}}\right),$$

mit k=1,....N

Anschließend (Schritt 52 in Figur 5) wird der Durchfluss Q_est gemäß der folgenden Beziehung berechnet:

$$(16)$$
$$Q\_est[k] = f\left(I\_est[k], p\_mc\_meas\_est - p\_calip\_est\_beg, T\_Fluid\_est\right)$$

Schließlich wird darauf basierend der geschätzte Bremsdruck am Ende der Zykluszeit gemäß der folgenden Beziehung berechnet (Schritt 53 in Figur 5):

$$(17)$$
$$p\_calip\_est\_end =$$
$$p\_calip\_est\_beg + E\left(p\_calip\_est\_beg, T\_Fluid\_est\right) \cdot T\_cycle \cdot \sum_{k=1}^{T\_cycle/\Delta t} Q\_est[k]$$

In einer vorteilhaften Ausführungsvariante kann, zum Zwecke der Vereinfachung, die funktionale Abhängigkeit f(...) in (16) mit einer analytischen Funktion angenähert oder als Kennfeld gespeichert und weiterverwendet werden. Die elektrische Spulenzeitkonstante T_coil kann wiederum mit einem konstanten Parameter angenähert werden. Die exponentielle Abhängigkeit $e^{-\frac{T\_cycle}{T\_coil}}$ kann entweder linear angenähert oder unter der Annahme einer konstanten Spulenzeitkonstante T_coil als ein konstanter Parameter betrachtet werden.

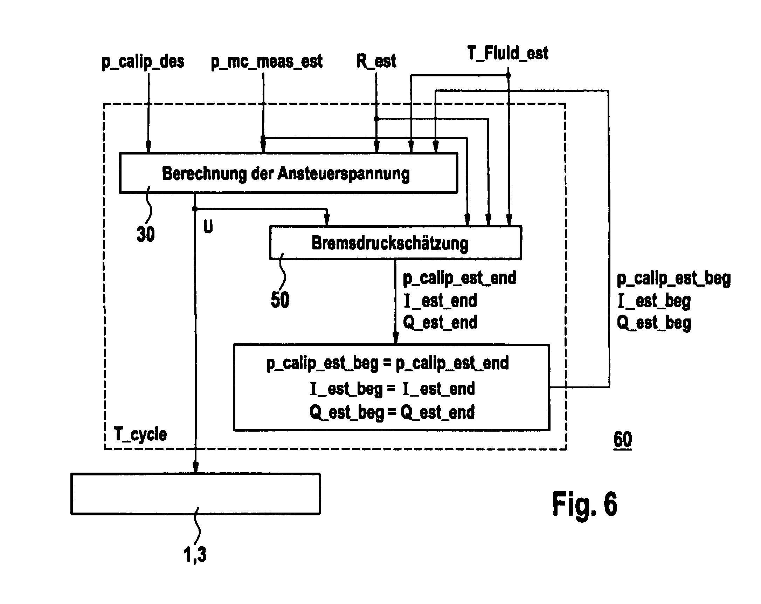

Das in Figur 6 dargestellte Blockdiagramm 60 verdeudicht nochmals die Schnittstellen.

**Patentansprüche**

1.  Verfahren für die Steuerung eines Proportionalmagnetventils (1) in einem hydraulischen System (10), wobei ein Modell des hydraulischen Systems (10) gebildet wird, dass Steuerzyklen (T_cycle) vorgegeben werden, und dass eine Schätzung des am Ende des Steuerzyklus (T_cycle) vorliegenden Drucks in dem hydraulischen System (10) und der an der Spule des Proportionalmagnetventils (1) anliegenden Spulenspannung (U) auf Basis der zu Beginn des Steuerzyklus (T_cycle) vorliegenden Größen, der physikalischen Parameter von Komponenten des hydraulischen Systems (10) und der Temperatur (T_Fluid) des Hydraulikfluids erfolgt,

- wobei in jedem Steuerzyklus (T_cycle) bewertet wird, ob es zweckmäßig ist, den Bremsdruck zu halten (Druckhaltephase) oder aufzubauen (Druckaufbauphase),
- wobei in der Druckhaltephase eine Spulenspannung (U_lock) an das Proportionalmagnetventil (1) angelegt wird, die ein sicheres Schließen des Proportionalmagnetventils (1) und dadurch ein Halten des Drucks in der Bremszange (3) ermöglicht,
- wobei die Spulenspannung (U_lock) aus dem geschätzten Spulenwiderstand (R_est), einer Druckdifferenz (p_mc_meas_est-p_calip_est_beg) zwischen dem geschätzten oder gemessenen Druck in dem Hauptbremszylinder (2) und dem geschätzten Anfangsbremsdruck bestimmt wird.

2. Verfahren nach Anspruch 1, **dadurch gekennzeichnet, dass** es sich bei dem hydraulischen System (10) um ein ABS/ESP-System eines Fahrzeugs handelt und dass physikalische Parameter des Proportionalmagnetventils (1) und der Bremszange (3) berücksichtigt werden.

3. Verfahren nach einem der vorhergehenden Ansprüche, **dadurch gekennzeichnet, dass** während der Dauer eines Steuerzyklus (T_cycle) ein linearer Durchfluss (Q) des Hydraulikfluids angenommen wird.

4. Verfahren nach einem der vorhergehenden Ansprüche, **dadurch gekennzeichnet, dass** jeder Steuerzyklus (T_cycle) in N Zeitintervalle unterteilt wird, und dass zwecks möglichst genauer Schätzung des am Ende des Steuerzyklus (T_cycle) vorliegenden Drucks in dem Hydrauliksystem (10) der Durchfluss (Q) in jedem Zeitintervall der N Zeitintervalle berechnet wird.

5. Verfahren nach einem der vorhergehenden Ansprüche, **dadurch gekennzeichnet, dass** für die Bestimmung der Spulenspannung (U) und die Schätzung des am Ende des Steuerzyklus (T_cycle) vorliegenden Drucks in dem Hydrauliksystem (10) die Elastizität (E) der Bremszange (3), die Abhängigkeit des Durchflusses (Q) von dem Spulenstrom (I), die an dem Proportionalmagnetventil (1) anliegende Druckdifferenz und die Induktivität der Spule des Proportionalmagnetventils (1) berücksichtigt werden.

6. Verfahren nach einem der vorhergehenden Ansprüche, **dadurch gekennzeichnet, dass** für das Modell folgende Gleichungen zugrunde gelegt werden:

$$(1) \qquad \frac{dI}{dt} = \frac{1}{L}\left(U - R \cdot I\right),$$

mit

L = Induktivität der Spule
R = ohmscher Widerstand der Spule
I = Spulenstrom
dI/dt = zeitliche Änderung des Spulenstroms;

$$(2) \qquad Q = f_1\left(I, p\_mc - p\_calip, T\_Fluid\right),$$

mit:

Q = Durchfluss
P_mc - p_calip = Druckdifferenz an dem Proportionalmagnetventil
I = Spulenstrom
T_Fluid = Temperatur des Hydraulikfluids;

$$(3) \qquad \frac{dp\_calip}{dt} = E\big(p\_calip, T\_Fluid\big)\cdot Q ,$$

mit:

p_calip = Bremszangendruck
E = hydraulische Elastizität der Bremszange
Q = Durchfluss
T_Fluid = Temperatur des Hydraulikfluids.

7. Verfahren nach einem der vorhergehenden Ansprüche, **dadurch gekennzeichnet, dass** die Spannung (U) an dem Proportionalmagnetventil (1) gemäß der folgenden Beziehung ermittelt wird:

(4)

$$U = f_1\big(p\_calip\_des, p\_calip\_est\_beg, p\_mc\_meas\_est, T\_Fluid\_est, parameters\big)$$

Mit

U Spannung an dem Proportionalmagnetventil
P_calip_des Sollbremsdruck
P_calip_est_beg geschätzter Druck zu Beginn des Steuerzyklus
P_mc_meas_est geschätzter Druck des Hauptbremszylinders
T_Fluid_est geschätzte Temperatur des Hydraulikfluids
Parameters Streckenparameter.

8. Verfahren nach einem der vorhergehenden Ansprüche, **dadurch gekennzeichnet, dass** der geschätzte Bremsdruck am Ende des Steuerzyklus gemäß der folgenden Beziehung ermittelt wird:

(5)

$$p\_calip\_est\_end = f_2\big(U, p\_mc\_meas\_est, p\_calip\_est\_beg, T\_Fluid\_est, parameters\big)$$

Mit:

P_calip_est_end geschätzter Bremsdruck am Ende des Steuerzyklus,
T_cycle Steuerzyklus,
U Spulenspannung,
p_calip_est_beg geschätzter Druck am Anfang des Steuerzyklus,
p_mc_meas_est Druck an dem Hauptbremszylinder 2,
T_Fluid_est geschätzte Temperatur des Hydraulikfluids,
parameters Streckenparameter.

9. Verfahren nach einem der vorhergehenden Ansprüche, **dadurch gekennzeichnet, dass** eine minimale Druckstufe ($\Delta$p_min) vorgeben wird.

10. Verfahren nach einem der vorhergehenden Ansprüche, **dadurch gekennzeichnet, dass** die Druckhaltephase dann gesteuert wird, wenn die Beziehung gilt:

(6)     (p_calip_des - p_calip_est) < $\Delta$p_min

Und die Druckaufbauphase dann gesteuert wird, wenn die Beziehung

$$(7) \quad (p\_calip\_des - p\_calip\_est) >= \Delta p\_min$$

gilt, mit

$\Delta p\_min$ = minimale Druckstufe
P_calip_des = Solldruck in der Bremszange
P_calip_est = geschätzter Druck in der Bremszange.

11. Verfahren nach einem der vorhergehenden Ansprüche, **dadurch gekennzeichnet, dass** für die Spulenspannung (U) eine minimale Schwelle (U_min) und eine maximale Schwelle (U_max) vorgegeben werden.

12. Verfahren nach einem der vorhergehenden Ansprüche, **dadurch gekennzeichnet, dass** ein Wechsel in die Druckhaltephase stattfindet, wenn die bei der Druckaufbauphase berechnete Spannung (U_incr) an dem Proportionalmagnetventil (1) größer ist als (U_max).

13. Verfahren nach einem der vorhergehenden Ansprüche, **dadurch gekennzeichnet, dass** die minimale Schwelle (U_min) als Spulenspannung gewählt wird, wenn die in der Druckaufbauphase berechnete Spannung (U_incr) kleiner ist als die minimale Spannung (U_min).

14. Verfahren nach einem der vorhergehenden Ansprüche, **dadurch gekennzeichnet, dass** während eines Steuerzyklus (T_cycle) die an das Proportionalmagnetventil (1) anzulegende Spannung (U_incr) nach folgender Beziehung ermittelt wird:

$$(13) \quad U\_incr = R\_est \frac{I\_end - I\_est\_beg \cdot e^{-\frac{T\_cycle}{T\_coil}}}{1 - e^{-\frac{T\_cycle}{T\_coil}}}$$

mit

$$T\_coil = \frac{L}{R\_est},$$

und

R_est = geschätzter Widerstand der Spule des Proportionalmagnetventils 1,
I_end = notwendiger Spulenstrom am Ende des Steuerzyklus,
I_est_beg = geschätzter Strom zu Beginn des Steuerzyklus.

15. Verfahren nach einem der vorhergehenden Ansprüche, **dadurch gekennzeichnet, dass** in jedem Zeitintervall (N) des Steuerzyklus (T_cycle) der geschätzte Spulenstrom (I_est) nach der folgenden Beziehung ermittelt wird:

$$(15) \quad I\_est[k] = \frac{1}{R\_est}\left(U + (R\_est \cdot I\_beg - U)e^{\frac{k\Delta t}{T\_coil}}\right),$$

mit k=1,....N und

I_est = geschätzter Spulenstrom,
R_est = geschätzter Spulenwiderstand,
U = Spulenspannung,
I_beg = Spulenstrom zu Beginn des Steuerzyklus.

**16.** Verfahren nach einem der vorhergehenden Ansprüche, **dadurch gekennzeichnet, dass** der geschätzte Bremsdruck (p_calip_est_end) am Ende des Steuerzyklus nach der folgenden Beziehung ermittelt wird:

(17)

$$p\_calip\_est\_end = p\_calip\_est\_beg + E\left(p\_calip\_est\_beg, T\_Fluid\_est\right) \cdot T\_cycle \cdot \sum_{k=1}^{T\_cycle/\Delta t} Q\_est[k]$$

**17.** Vorrichtung, enthaltend Mittel,
worin das Verfahren nach einem der Ansprüche 1 bis 16 durchgeführt wird.

**Claims**

**1.** Method for controlling a proportional solenoid valve (1) in a hydraulic system (10), wherein a model of the hydraulic system (10) is formed, wherein control cycles (T_cycle) are predefined, and an estimation is made of the pressure present in the hydraulic system (10) at the end of the control cycle (T_cycle) and of the coil voltage (U), present at the coil of the proportional solenoid valve (1), on the basis of the variables present at the start of the control cycle (T_cycle), the physical parameters of components of the hydraulic system (10) and the temperature (T_Fluid) of the hydraulic fluid,

- wherein in each control cycle (T_cycle) it is evaluated whether it is expedient to hold the brake pressure (pressure holding phase) or increase it (pressure increasing phase),
- wherein in the pressure holding phase a coil voltage (U_lock) is applied to the proportional solenoid valve (1), said coil voltage (U_lock) permitting reliable closing of the proportional solenoid valve (1) and as a result holding of the pressure in the brake calliper (3),
- wherein the coil voltage (U_lock) is determined from the estimated coil resistance (R_est), a pressure difference (p_mc_meas_est-p_calip_est_beg) between the estimated or measured pressure in the master brake cylinder (2) and the estimated initial brake pressure.

**2.** Method according to Claim 1, **characterized in that** the hydraulic system (10) is an ABS/ESP system of a vehicle, and **in that** physical parameters of the proportional solenoid valve (1) and of the brake calliper (3) are taken into account.

**3.** Method according to one of the preceding claims, **characterized in that** the linear through-flow (Q) of the hydraulic fluid is assumed during the duration of a control cycle (T_cycle).

**4.** Method according to one of the preceding claims, **characterized in that** each control cycle (T_cycle) is divided into N time intervals, and **in that** the through-flow (Q) in each time interval of the N time intervals is calculated for the purpose of estimating as precisely as possible the pressure present in the hydraulic system (10) at the end of the control cycle (T_cycle).

**5.** Method according to one of the preceding claims, **characterized in that** the elasticity (E) of the brake calliper (3), the dependence of the through-flow (Q) on the coil current (I), the pressure difference present at the proportional solenoid valve (1) and the inductance of the coil of the proportional solenoid valve (1) are taken into account for the determination of the coil voltage (U) and the estimation of the pressure present in the hydraulic system (10) at the end of the control cycle (T_cycle).

**6.** Method according to one of the preceding claims, **characterized in that** the following equations are used as the basis for the model:

$$(1) \qquad \frac{dI}{dt} = \frac{1}{L}(U - R \cdot I),$$

where

L = inductance of the coil
R = ohmic resistance of the coil
I = coil current
dI/dt = change in the coil current over time

$$(2) \qquad Q = f_1\left(I, p\_mc - p\_calip, T\_Fluid\right),$$

where

Q = through-flow
p_mc - p_calip = pressure difference at the proportional solenoid valve
I = coil current
T_Fluid = temperature of the hydraulic fluid:

$$(3) \qquad \frac{dp\_calip}{dt} = E\left(p\_calip, T\_Fluid\right) \cdot Q,$$

where:

p_calip = brake calliper pressure
E = hydraulic elasticity of the brake calliper
Q = through-flow
T_Fluid = temperature of the hydraulic fluid

7. Method according to one of the preceding claims, **characterized in that** the voltage (U) at the proportional solenoid valve (1) is determined according to the following relationship:

$$(4)$$
$$U = f_1\left(p\_calip\_des, p\_calip\_est\_beg, p\_mc\_meas\_est, T\_Fluid\_est, parameters\right)$$

where

U = voltage at the proportional solenoid valve
p_calip_des = setpoint brake pressure
p_calip_est_beg = estimated pressure at start of the control cycle
p_mc_meas_est = estimated pressure of the master brake cylinder
T_Fluid_est = estimated temperature of the hydraulic fluid
Parameters = route parameters.

8. Method according to one of the preceding claims, **characterized in that** the estimated brake pressure at the end of the control cycle is estimated according to the following relationship:

**(5)**

$$p\_calip\_est\_end = f_2\left(U, p\_mc\_meas\_est, p\_calip\_est\_beg, T\_Fluid\_est, parameters\right)$$

where

p_calip_est_end = estimated brake pressure at the end of the control cycle,
T_cycle = control cycle,
U = coil voltage,
p_calip_est_beg = estimated pressure at the start of the control cycle,
p_mc_meas_est = pressure at the master brake cylinder 2,
T_Fluid_est = estimated temperature of the hydraulic fluid, and
parameters = route parameters

9. Method according to one of the preceding claims, **characterized in that** a minimum pressure stage (Δp_min) is predefined.

10. Method according to one of the preceding claims, **characterized in that** the pressure holding phase is controlled when the following relationship applies:

$$(6) \quad (p\_calip\_des - p\_calip\_est) < \Delta p\_min$$

and the pressure increasing phase is controlled when the following relationship applies:

$$(7) \quad (p\_calip\_des - p\_calip\_est) >= \Delta p\_min$$

where

Δp_min = minimum pressure stage
p_calip_des = setpoint pressure in the brake calliper
p_calip_est = estimated pressure in the brake calliper

11. Method according to one of the preceding claims, **characterized in that** a minimum threshold (U_min) and a maximum threshold (U_max) are predefined for the coil voltage (U).

12. Method according to one of the preceding claims, **characterized in that** a changeover into the pressure holding phase occurs if the voltage (U_incr) which is calculated during the pressure increasing phase at the proportional solenoid valve (1) is greater than (U_max).

13. Method according to one of the preceding claims, **characterized in that** the minimum threshold (U_min) is selected as a coil voltage if the voltage U_incr) which is calculated in the pressure increasing phase is lower than the minimum voltage (U_min).

14. Method according to one of the preceding claims, **characterized in that** during a control cycle (T_cycle) the voltage U_incr) to be applied to the proportional solenoid valve (1) is determined according to the following relationship:

$$(13) \quad U\_incr = R\_est \frac{I\_end - I\_est\_beg \cdot e^{\frac{T\_cycle}{T\_coil}}}{1 - e^{-\frac{T\_cycle}{T\_coil}}}$$

where

$$T\_coil = \frac{L}{R\_est},$$

and

R_est = estimated resistance of the coil of the proportional solenoid valve 1,
I_end = necessary coil current at the end of the control cycle, and
I_est_beg = estimated current at start of the control cycle.

15. Method according to one of the preceding claims, **characterized in that** in each time interval (N) of the control cycle (T_cycle) the estimated coil current (I_est) is determined according to the following relationship:

$$(15) \quad I\_est[k] = \frac{1}{R\_est}\left(U + (R\_est \cdot I\_beg - U)e^{\frac{k\Delta t}{T\_coil}}\right),$$

where k=1,...N and

I_est = estimated coil current,
R_est = estimated coil resistance,
U = coil voltage,
I_beg = coil current at start of the control cycle.

16. Method according to one of the preceding claims, **characterized in that** the estimated brake pressure (p_calip_est_end) at the end of the control cycle is determined according to the following relationship:

$$(17)$$

$$p\_calip\_est\_end =$$

$$p\_calip\_est\_beg + E(p\_calip\_est\_beg, T\_Fluid\_est) \cdot T\_cycle \cdot \sum_{k=1}^{T\_cycle/\Delta t} Q\_est[k]$$

17. Device containing means, wherein the method is carried out according to one of Claims 1 to 16.

**Revendications**

1. Procédé pour commander une électrovanne proportionnelle (1) dans un système hydraulique (10), selon lequel un modèle du système hydraulique (10) est formé, des cycles de commande (T_cycle) sont prédéfinis et une estimation de la pression présente dans le système hydraulique (10) à la fin du cycle de commande (T_cycle) et de la tension de bobine (U) appliquée à la bobine de l'électrovanne proportionnelle (1) est effectuée en se basant sur les grandeurs présentes au début du cycle de commande (T_cycle), les paramètres physiques de composants du système hydraulique (10) et la température (T_Fluid) du fluide hydraulique,

- une évaluation étant effectuée dans chaque cycle de commande (T_cycle) pour vérifier s'il est judicieux de maintenir (phase de maintien de la pression) ou d'établir (phase d'établissement de la pression) la pression de freinage,
- une tension de bobine (U_lock) étant appliquée à l'électrovanne proportionnelle (1) dans la phase de maintien de la pression, laquelle permet une fermeture garantie de l'électrovanne proportionnelle (1) et ainsi un maintien de la pression dans l'étrier de frein (3),

- la tension de bobine (U_lock) étant déterminée à partir de la résistance de bobine estimée (R_est), d'une différence de pression (p_mc meas_est-p_calip_est_beg) entre la pression estimée ou mesurée dans le maître-cylindre de frein (2) et la pression de freinage initiale estimée.

2. Procédé selon la revendication 1, **caractérisé en ce que** le système hydraulique (10) est un système ABS/ESP d'un véhicule et **en ce que** des paramètres physiques de l'électrovanne proportionnelle (1) et de l'étrier de frein (3) sont pris en compte.

3. Procédé selon l'une des revendications précédentes, **caractérisé en ce qu'**un débit linéaire (Q) du fluide hydraulique est supposé pendant la durée d'un cycle de commande (T_cycle).

4. Procédé selon l'une des revendications précédentes, **caractérisé en ce que** chaque cycle de commande (T_cycle) est divisé en N intervalles de temps et **en ce qu'**en vue d'une estimation la plus précise possible de la pression présente dans le système hydraulique (10) à la fin du cycle de commande (T_cycle), le débit (Q) est calculé dans chaque intervalle de temps des N intervalles de temps.

5. Procédé selon l'une des revendications précédentes, **caractérisé en ce que** l'élasticité (E) de l'étrier de frein (3), la dépendance du débit (Q) au courant de bobine (I), la différence de pression présente au niveau de l'électrovanne proportionnelle (1) et l'inductance de la bobine de l'électrovanne proportionnelle (1) sont prises en compte pour la détermination de la tension de bobine (U) et l'estimation de la pression présente dans le système hydraulique (10) à la fin du cycle de commande (T_cycle).

6. Procédé selon l'une des revendications précédentes, **caractérisé en ce que** le modèle s'appuie sur les équations suivantes :

$$(1) \quad \frac{dI}{dt} = \frac{1}{L}(U - R \cdot I),$$

où :

L désigne l'inductance de la bobine
R désigne la résistance ohmique de la bobine
I désigne le courant de bobine
dI/dt désigne la variation dans le temps du courant de bobine ;

$$(2) \quad Q = f_1 \ (I, \ p\_mc - p\_calip, \ T\_Fluid)$$

où :

Q désigne le débit
p_mc - p_calip désigne la différence de pression au niveau de l'électrovanne proportionnelle
I désigne le courant de bobine
T_Fluid désigne la température du fluide hydraulique ;

$$(3) \quad \frac{dp\_calip}{dt} = E(\overline{p\_calip}, \overline{T\_Fluid} \ ) \cdot Q$$

où :

p_calip désigne la pression de l'étrier de frein
E désigne l'élasticité hydraulique de l'étrier de frein
Q désigne le débit
T_Fluid désigne la température du fluide hydraulique.

**7.** Procédé selon l'une des revendications précédentes, **caractérisé en ce que** la tension (U) aux bornes de l'électrovanne proportionnelle (1) est déterminée conformément à la relation suivante :

$$(4) \quad U = f_1(p\_calip\_des, \; p\_calip\_est\_beg, \; p\_mc\_meas\_est, \; T\_Fluid\_est, \; parameters)$$

où :

U désigne la tension aux bornes de l'électrovanne proportionnelle
p_calip_des désigne la pression de freinage de consigne
p_calip_est_beg désigne la pression estimée au début du cycle de commande
p_mc_meas_est désigne la pression estimée du maître-cylindre de frein
T_Fluid_est désigne la température estimée du fluide hydraulique
parameters désigne des paramètres du parcours.

**8.** Procédé selon l'une des revendications précédentes, **caractérisé en ce que** la pression de freinage estimée à la fin du cycle de commande est déterminée conformément à la relation suivante :

$$(5) \quad p\_calip\_est\_end = f_2(U, \; p\_mc\_meas\_est, \; p\_calip\_est\_beg, \; T\_Fluid\_est, \; parameters)$$

où :

p_calip_est_end désigne la pression de freinage estimée à la fin du cycle de commande
T_cycle désigne le cycle de commande
U désigne la tension de bobine
p_calip_est_beg désigne la pression estimée au début du cycle de commande
p_mc_meas_est désigne la pression au niveau du maître-cylindre de frein 2
T_Fluid_est désigne la température estimée du fluide hydraulique
parameters désigne des paramètres du parcours.

**9.** Procédé selon l'une des revendications précédentes, **caractérisé en ce qu'**un palier de pression minimum ($\Delta$p_min) est prédéfini.

**10.** Procédé selon l'une des revendications précédentes, **caractérisé en ce que** la phase de maintien de la pression est commandée lorsque la relation suivante est vérifiée :

$$(6) \quad (p\_calip\_des - p\_calip\_est) < \Delta p\_min$$

et la phase d'établissement de la pression est commandée lorsque la relation

$$(7) \quad (p\_calip\_des - p\_calip\_est) >= \Delta p\_min$$

est vérifiée
où :

$\Delta$p_min désigne le palier de pression minimum
p_calip_des désigne la pression de consigne dans l'étrier de frein
p_calip_est désigne la pression estimée dans l'étrier de frein.

**11.** Procédé selon l'une des revendications précédentes, **caractérisé en ce qu'**un seuil minimum (U_min) et un seuil maximum (U_max) sont prédéfinis pour la tension de bobine (U).

12. Procédé selon l'une des revendications précédentes, **caractérisé en ce qu'**un changement dans la phase de maintien de la pression a lieu lorsque la tension (U_incr) aux bornes de l'électrovanne proportionnelle (1) calculée lors de la phase d'établissement de la pression est supérieure à (U_max).

13. Procédé selon l'une des revendications précédentes, **caractérisé en ce que** le seuil minimum (U_min) est choisi comme tension de bobine lorsque la tension (U_incr) calculée dans la phase d'établissement de la pression est inférieure à la tension minimale (U_min).

14. Procédé selon l'une des revendications précédentes, **caractérisé en ce que** pendant un cycle de commande (T_cycle), la tension (U_incr) à appliquer aux bornes de l'électrovanne proportionnelle (1) est déterminée d'après la relation suivante :

$$(13) \quad U\_incr = R\_est \; \frac{I\_end - I\_est\_beg \cdot e^{\frac{T\_cycle}{T\_coil}}}{1 - e^{\frac{T\_cycle}{T\_coil}}}$$

où :

$$T\_coil = \frac{L}{R\_est}$$

et
R_est désigne la résistance estimée de la bobine de l'électrovanne proportionnelle (1)
I_end désigne le courant de bobine nécessaire à la fin du cycle de commande
I_est_beg désigne le courant estimé au début du cycle de commande.

15. Procédé selon l'une des revendications précédentes, **caractérisé en ce que** dans chaque intervalle de temps (N) du cycle de commande (T_cycle), le courant de bobine estimé (I_est) est déterminé d'après la relation suivante :

$$(15) \quad I\_est[k] = \frac{1}{R\_est}\left(U + (R\_est \cdot I\_beg - U)e^{\frac{k\Delta t}{T\_coil}}\right).$$

où :

k = 1, ..., N et
I_est désigne le courant de bobine estimé
R_est désigne la résistance de bobine estimée
U désigne la tension de bobine
I_beg désigne le courant de bobine au début du cycle de commande.

16. Procédé selon l'une des revendications précédentes, **caractérisé en ce que** la pression de freinage estimée (p_calip_est_end) à la fin du cycle de commande est déterminée d'après la relation suivante :

(17)

p_calip_est_end = p_calip_est_beg + E(p_calip_est_beg,

T_Fluid_est) * T_cycle $\sum_{k=1}^{\frac{T\_cycle}{\Delta t}} Q\_est[k]$

17. Dispositif contenant des moyens dans lesquels est exécuté le procédé selon l'une des revendications 1 à 16.

**Fig. 1**

**Fig. 2**

Fig. 3

EP 2 231 452 B1

I_est_beg   T_Fluid_est   p_calip_des   Q_est_beg   p_calip_est_beg   p_mc_meas_est   R_est

$$Q\_end = 2\frac{p\_calip\_des - p\_calip\_est\_beg}{T\_cycle \cdot E(p\_calip\_beg, T\_Fluid\_est)} \cdot Q\_est\_beg$$

41

42

Q_end

$$I\_end = \max[\ f^{-1}(p\_mc\_meas\_est - p\_calip\_est\_beg, Q\_end, T\_Fluid\_est), 0]$$

40

43

I_end

$$U\_incr = R\_est \cdot \frac{I\_end \cdot I\_est\_beg \cdot e^{-\frac{T\_cycle}{T\_coll}}}{1 - e^{-\frac{T\_cycle}{T\_coll}}} \qquad T\_coll = \frac{L}{R\_est}$$

U_incr

**Fig. 4**

Fig. 5

EP 2 231 452 B1

p_calip_des   p_mc_meas_est   R_est   T_Fluid_est

Berechnung der Ansteuerspannung

30

U

Bremsdruckschätzung

50

p_calip_est_end
I_est_end
Q_est_end

p_calip_est_beg
I_est_beg
Q_est_beg

p_calip_est_beg = p_calip_est_end
I_est_beg = I_est_end
Q_est_beg = Q_est_end

T_cycle

60

1,3

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0055021 A1